# EUROPEAN PATENT SPECIFICATION

(11) **EP 0 895 095 B1**
(45) Date of publication and mention of the grant of the patent: **27.02.2002**
(21) Application number: 97305645.0
(22) Date of filing: 28.07.1997
(51) Int. Cl.: G01S 13/88

(54) **Vibration detection**
Vibrationsdetektion
Détection de vibrations

(43) Date of publication of application: 03.02.1999
(73) Proprietor: Mecon Limited, Cambridge CB3 0AE (GB)
(72) Inventor: Harper, Mark Francis Lucien, Cambridge CB1 4TX (GB)
(74) Representative: Hooper, John Peter Lindesay

(56) References cited:
- US-A- 4 218 678
- US-A- 4 484 193
- US-A- 4 620 192
- US-A- 4 673 940
- US-A- 5 565 872

## Description

This invention is concerned with vibration detection, and relates in particular to the detection of the vibrations of an object by means of radar.

There are many situations in which it is desirable to detect the vibrations of an object without making physical contact with it. This may be because the object is a lightweight structure, and physical contact might disturb its vibrations and prevent their being measured in the undisturbed state, or it may be because the object is difficult to make contact with - as is the case where the object is a pipe buried underground.

There are many devices and procedures which will allow the non-contact detection and measurement of vibration. Many of these rely on short-wave electromagnetic radiation, including microwaves and laser beams, and a good example of one such is the laser velocimeter marketed by Ometron Ltd of the UK. This device shines a laser beam onto the surface of the object whose vibration is to be measured, detects the reflection of the beam, and is then able to deduce the velocity of vibration of the surface of the object at the point of reflection by means which involve interference between the reflected beam and a reference beam from which the transmitted beam was derived.

For conventional devices to work, the displacement of the vibrating surface must be significant compared to a wavelength of the radiation used to detect them. If the vibrations are substantially smaller then these conventional means of detection will not be effective.

However, there are some situations in which short-wavelength radiation cannot be reflected from the object, and a good example is that of water distribution pipes buried one or two metres (3-7 feet) below ground. In the neighbourhood of a leak in such a pipe the typical "hissing" sound of the leak is conducted along the pipe as vibration. This can be heard quite some distance away, but it would be desirable to be able to use more up-to-date equipment to detect water leaks by sensing this vibration in the manner described above. Unfortunately, the ground absorbs short-wavelength radiation very rapidly indeed, and neither laser beams (with wavelengths of the order of micrometres) nor microwave radiation (with wave lengths of the order of millimetres) would penetrate to the depth required. In a case such as this, then, radar signals - signals with much longer wavelengths (of the order of centimetres; often around 10 cm) - are preferable because they can penetrate up to several metres of ground, and can therefore be used to obtain a reflection from such buried pipes.

Unfortunately, using radiations of these longer wavelengths makes vibrations much harder to detect, simply because the displacements produced by vibrations of things like pipes at audio frequencies are typically of the order of a micron (1 micrometre, or 10⁻⁶ m) or less, i.e. they are far smaller than the radar wavelength, by a factor of a hundred thousand or so. The effect of vibration on the returning radar reflection (i.e. the echo from the vibrating target) is so small as to be to all intents and purposes quite unmeasurable by conventional means. Accordingly, this difficulty has hitherto prevented the use of radar for vibration detection.

The present invention, however, suggests a way in which radar, with its relatively long wavelengths and thus sufficient ground penetration, can be used - a way in which the vibrational information carried by the echo from a vibrating object such as a pipe can be extracted to provide a useful output. More specifically, the invention proposes employing a radar system in which a signal equivalent to the echo from the object when it is *not* vibrating is subtracted from the actual returning echo signal *before* that echo signal is detected by the system's receiver, so that the signal then actually received by the receiver consists only of that very much smaller component of the echo which is due to the displacements of the vibrating object from its rest position. This component may then be amplified, and the said displacements may then be estimated from it.

In one aspect, therefore, the invention provides a method of measuring small, time-varying displacements of a vibrating object, which method involves the object being illuminated with electromagnetic radiation of a radar nature - that is, of a wavelength considerably larger than the displacements - and the returned echo signal then being amplified to enable its subsequent use to provide useful data, in which method
a signal equivalent to the echo from the object when it is *not* vibrating is subtracted from the returned echo signal before it is amplified so that the signal that *is* amplified consists only or mostly of the very much smaller component of the echo which is due to the displacements of the vibrating object from its rest position.

In another aspect, the invention provides apparatus for measuring small, time-varying displacements of a vibrating object, which apparatus includes transmitting means for illuminating the object with electromagnetic radiation of a radar nature - that is, of a wavelength considerably larger than the displacements - and receiver means for receiving and amplifying the returned echo signal to enable its subsequent use to provide useful data, which apparatus also includes:
generating means to supply a second signal equivalent to the echo from the object when it is *not* vibrating; and
coupler means to subtract that second signal from the returned echo signal before it is amplified so as to provide a third signal that consists only or mostly of the very much smaller component of the echo signal which is due to the displacements of the vibrating object from its rest position, and then to feed that third signal to the receiver amplifier.

The invention provides a method of, and apparatus for, measuring small, time-varying displacements of a vibrating object. Its primary purpose is for measuring vibrations in underground objects, specifically pipes (such as water pipes) that may leak their contents, and that will generate vibrations, manifested as a hissing noise, when they do so. Most typical of this is a mains water pipe.

The invention involves the object being illuminated, by a transmitter thereof, with electromagnetic radiation of a radar nature - that is, of a wavelength considerably larger than the displacements. In this context, "considerably larger" means in general four or even more orders of magnitude larger - as noted above, a leaking mains water pipe, for example, produces audio frequency vibrations with amplitudes typically of the order of a micron (1 micrometre, or one hundredth of a centimetre [10⁻⁶ m]) or less; a typical conventional "centimetre" radar has a wavelength a hundred thousand times that.

Illuminating the object with the radar signal requires a generator producing the correct signal and feeding it to a transmitting antenna. Moreover, to receive the echo signal there is required a receiving antenna suitably coupled to the receiver proper (which will include appropriate amplifying and other stages, as needed). This is in principle all quite well known, and needs no further comment here. Nevertheless, the following comments may be helpful for a fuller appreciation of the invention.

Firstly, the signal from the receiver antenna is preferably demodulated by mixing with some of the transmitter output signal. Secondly, the transmitted signal is conveniently continuous, rather than being in the form of pulses of finite duration. Thirdly, most preferably the transmitter and receiver antennae are separate and distinct, and direct coupling between them is caused to be small or preferably negligible by suitable choice of their relative positions. This latter may be more easily achieved if the transmitter and receiver antennae are dipole antennae, and are disposed at right angles to each other.

In the invention the returned echo signal is amplified to enable its subsequent use to provide useful data, but before it is amplified a signal equivalent to the echo from the object when it is *not* vibrating is subtracted therefrom, leaving only (or mostly) the vibrational component by itself. This subtraction from the returned echo signal takes place before the returned echo signal is amplified; most conveniently, then, it is effected immediately after the returned signal has been picked up by the receiving antenna, and so before the antenna's output is fed into the receiver proper.

The signal to be subtracted from the returned echo signal is a signal equivalent to the echo from the object when it is *not* vibrating; such a signal is, of course, a very small (low amplitude) version of the radiated signal used to illuminate the object in the first place, which radiated signal is generated in the equipment's transmitter. Thus, to provide the required signal equivalent to the echo from the object when it is *not* vibrating there need merely be taken a suitably-small part of the generated signal, which can then be subtracted from (by suitably modifying its phase and then electronically adding it to) the returned echo signal. This small part can notionally be provided by feeding a portion of the generated signal to an attenuator. However, plain attenuation may not be sufficient, and therefore it is preferred to form the small signal using circuitry that enables the signal to be modified in amplitude and phase in exactly the manner required. Such circuitry is a network device of the type discussed in more detail hereinafter with reference to the accompanying Drawings; it allows both the gain and phase of its output signal to be changed relative to its input signal in accordance with operator-adjusted controls. In the hereinafter-described embodiment of such a network device, the input signal is passed to a variable-gain amplifier and a quadrature filter, and the output from the filter is fed to another variable-gain amplifier (either amplifier may have a gain which is negative, zero, or positive depending on its adjustment). The amplifiers' output signals are then passed to a summing filter the output of which is the sum of the two amplifier outputs and constitutes the output of the network device. By adjusting the gains of the amplifiers the network device output signal may be caused to have any desired amplitude and phase relative to the original input signal.

The network device can be automatically adjusted using an active control system. A convenient form of such a device is in essence a feedback circuit which acts to minimise the time-average of the squared amplitude of the returned signal, and preferably operates according to the method of gradient descent (so that the circuit detects the amplitude of the echo received by the antenna and repeatedly modifies the amplitude and phase of the signal subtracted therefrom in such a way as to reduce the time-average of the signal's squared amplitude as far as possible).

In the invention the signal equivalent to the echo from the object when it is *not* vibrating is subtracted from the returned echo signal before it is amplified so that the signal that *is* amplified consists only or mostly of the very much smaller component of the echo which is due to the displacements of the vibrating object from its rest position. This "subtraction" is most conveniently effected by feeding two signals to the two inputs of a directional coupler (using directional couplers to combine one RF signal with another is a well-known technique in RF systems engineering, and needs no detailed explanation here; in the Specific Description hereinafter with reference to the accompanying Drawings there is described one arrangement wherein the relative phases of the two signals are adjusted so that they may be added by a direction coupler to give the required result).

It will be seen that the invention provides a means of measuring small, time-varying displacements of an object using a radar signal whose wavelength is many orders of magnitude larger than the said displacements. A radar system is used in which a signal equivalent to the echo from the said object when it is not vibrating is subtracted from the returning signal before it is detected by the receiver of the radar system so that the signal received by the radar receiver consists only of the very much smaller component of the echo which is due to the displacements of the vibrating object from its rest position. This component may then be amplified and the said displacements may be estimated from it.

Two embodiments of the invention are now described, though by way of illustration only, with reference to the accompanying diagrammatic Drawings in which:
Figure 1
   shows a block diagram for a vibration-detecting and -measuring radar system of the invention;
Figure 2
   shows a block diagram of a network device for producing a subtraction signal; and
Figure 3
   shows the block diagram for an alternative configuration of the radar system.

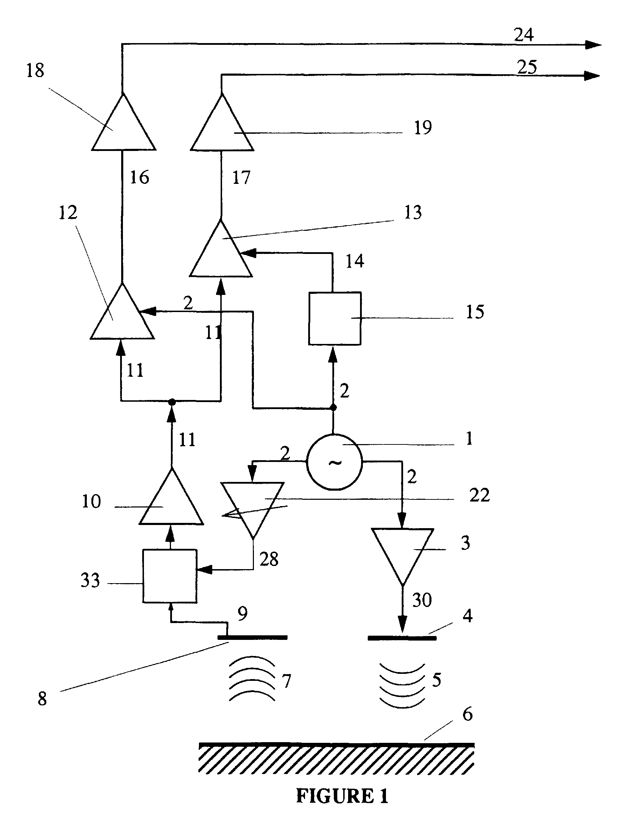

Figure 1 is a block diagram of a radar system of the invention. It shows the signal paths between various components of the radar system. For the most part the components are standard RF (radio frequency) components, and they are to be connected together using conventional techniques which will be well-known to anyone practised in the art of constructing RF systems which use frequencies in the order of 500 megahertz. The circuit is now explained, as follows.

A crystal oscillator (1) produces a signal (2) at a fixed and stable angular frequency ω₀, and with constant amplitude *A*₂. The signal 2 is amplified by an amplifier (3) which feeds a continuous signal (30) to a transmitter antenna (4). The antenna 4 consequently radiates a beam of radio waves (5). If this beam 5 encounters a reflector (6, such as a buried pipe) then a reflected beam (7) may return to the receiver antenna (8). The antenna 8 should preferably be positioned so that direct coupling between it and the transmitter antenna 4 is small (and preferably negligible), so that in the absence of any reflecting object 6 the signal at the receiving antenna 8 will also be small (or negligible). For example, if the antennae 4,8 are simple dipole antennae then they may be placed at right angles to each other.

The antenna 8 passes the received signal (9) to an amplifier (10) *via* a coupler (33) which is described further hereinafter. The amplified signal (11) is passed to two identical mixers (12,13; a mixer is a device with two input signals whose output signal is the arithmetic product of its two input signals). In the first mixer 12 the signal 11 is mixed with (i.e. multiplied by) the oscillator output signal 2, while in the second mixer 13 it is mixed with the output of a quadrature filter (15) which is itself driven by the oscillator output signal 2. This results in two signals (16,17) output by the mixers 12,13 respectively. The signals 16,17 will now be described in more detail by means of the following Equations.

Let the signal 2 from the oscillator 1 be denoted by the symbol *s*₂(t), and let it be described by the Equation${\text{s}}_{\text{2}} \text{(} \text{t} \text{) =} {\text{A}}_{\text{2}} {\text{cosω}}_{\text{0}} \text{t}$ where *t* is time. Let the output (14) of the quadrature filter 15 be denoted by the symbol *s*₁₄(*t*). Let its output be described by the Equation$\text{<fax>} {\text{s}}_{\text{14}} \text{(} \text{t} \text{) =} {\text{A}}_{\text{14}} {\text{sinω}}_{\text{0}} \text{t}$ i.e. the signal 14 is to be of the same amplitude as the signal 2 but is to be phase shifted by 90° with respect to signal 2. Let the signal 11 be denoted by the symbol *s*₁₁(*t*), and let it be described by the Equation${\text{s}}_{\text{11}} \text{(} \text{t} \text{) =} {\text{A}}_{\text{11}} {\text{cos(ω}}_{\text{0}} {\text{+ φ}}_{\text{11}} \text{)}$ where φ₁₁ represents the phase shift of the reflected signal 11 with respect to the oscillator output signal 2. Let the signal (16) be denoted by the symbol *s*₁₆(*t*), and let the signal (17) be denoted by the symbol *s*17(*t*). Then the output signals 16,17 of the mixers will be described by the Equations

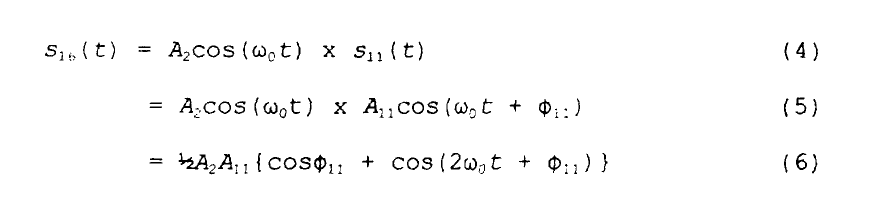

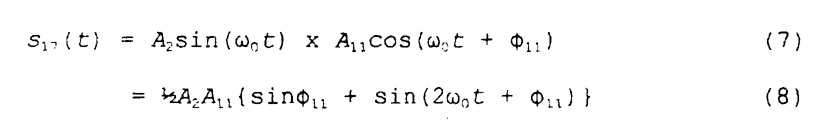

These Equations demonstrate that the output signals 16,17 from the mixers 12,13 each contain a component which depends on the phase φ₁₁ of the reflected signal 11, and is independent of the oscillator frequency ω₀ - i.e., it is unmodulated and a second component which is modulated at twice the oscillator frequency. These signals 16,17 are then passed through low-pass filters (18,19) which are adjusted so that they remove the component which is modulated at twice the oscillator frequency while passing the unmodulated component. The output signals [24; to be denoted *s*₂₄(*t*), and 25 (to be denoted *s*₂₅(*t*)] are therefore given by the Equations${\text{s}}_{\text{24}} \text{(} \text{t} \text{) = ½} {\text{A}}_{\text{2}} {\text{A}}_{\text{11}} {\text{cosφ}}_{\text{11}}$ and${\text{s}}_{\text{25}} \text{(} \text{t} \text{) = ½} {\text{A}}_{\text{2}} {\text{A}}_{\text{11}} {\text{sinφ}}_{\text{11}}$ The phase of the received signal 9 may therefore be deduced from the signals 24,25 *via* the Equation${\text{φ}}_{\text{11}} \text{=} \text{arc} \text{tan (} \frac{\text{(} {\text{s}}_{\text{25}} \text{(} \text{t} \text{))}}{\text{(} {\text{s}}_{\text{24}} \text{(} \text{t} \text{))}} \text{)}$

The phase φ₁₁ of the received signal 9 is to be used as an indicator of small displacements of the body 6. If the body 6 moves, then the length of the radio wave propagation path from transmitter antenna 4 to receiver antenna 8 *via* the body 6 changes and consequently the phase of the received signal 11 also changes. Let the velocity of propagation of the radio waves 5,7 be c. If a change δφ₁₁ in the phase φ₁₁ is detected then the change δ/ in path length to which this corresponds is given by$\text{δ} \text{1} \text{=} \frac{\text{c}}{{\text{ω}}_{\text{0}}} {\text{δφ}}_{\text{11}}$

This Equation may also be used to obtain an order of magnitude estimate of the size of the phase shift which may result from a displacement of the object which causes a change δ/in the path length in the case of a ground-probing radar which is to be used to detect vibrations in buried pipes. Vibrational displacements may be expected to be of order 10⁻⁶m. The angular frequency ω₀ cannot be much higher than order 10⁹ rad/sec because of absorption by the ground. If *c* is taken to be about 5x10⁷ m/sec then changes in phase cannot be expected to exceed order 2x10⁻⁵ radians. This is too small to be detected by conventional means, and the following means may be used instead.

Equation (3) gives the received signal including the effects of the phase shift φ₁₁. We now expand this to allow for the case where φ₁ varies to a small extent with time by an amount δφ₁₁(*t*) which is the phase shift due to vibrations of the object 6 and which is itself a function of time *t.* We write${\text{φ}}_{\text{11}} {\text{= (φ}}_{\text{11}} {\text{)}}_{\text{0}} {\text{+ δφ}}_{\text{11}} \text{(} \text{t} \text{)}$ where (φ₁₁)₀ is the constant component of φ₁₁. We may now write a more general form of Equation 3:${\text{s}}_{\text{11}} \text{(} \text{t} \text{) =} {\text{A}}_{\text{11}} {\text{cos(ω}}_{\text{0}} \text{t} {\text{+ (φ}}_{\text{11}} {\text{)}}_{\text{0}} {\text{+ δφ}}_{\text{11}} \text{(} \text{t} \text{))}$ Given that the phase shift δφ₁₁(*t*) is expected to be very small we may expand Equation (14) and obtain the following very accurate approximation to the received signal 11:${\text{s}}_{\text{11}} \text{(} \text{t} \text{) =} {\text{A}}_{\text{11}} \text{{} \text{cos} {\text{((ω}}_{\text{0}} \text{t} {\text{+(φ}}_{\text{11}} {\text{)}}_{\text{0}} {\text{)-δφ}}_{\text{11}} \text{(} \text{t} \text{)} \text{sin} {\text{(ω}}_{\text{0}} \text{t} {\text{+(φ}}_{\text{11}} {\text{)}}_{\text{0}} \text{))}}$ This Equation expresses *s*₁₁(*t*) as the sum of an time-periodic, constant-amplitude term (i.e., the first term in the curly brackets hereinafter to be referred to as the non-varying part of *s*₁₁(*t*)) and a much smaller time-periodic, varying-amplitude term (i.e., the second term in the curly brackets hereinafter to be referred to as the varying part of *s*₁₁(*t*)). The first term is equivalent to the signal that would be received from the object if it were not vibrating; the second is due entirely to its vibrations. The signal *s*₁₁(*t*) will be dominated by the first term within the curly brackets because the term δφ₁₁(*t*) is so small in comparison to unity. This would normally render the second term undetectable because the gain of the receiver amplifier 10 will be set to accommodate the signal *s*₁₁(*t*) as a whole in order to avoid saturating the receiver, and the second term will then be so small that it will be masked by noise generated within the radar circuitry itself. To avoid this we arrange to cancel out the part of the signal *s*₁₁(*t*) represented by the first term before the signal reaches the amplifier 10 so that the gain can be set to accommodate the second term only. This cancellation may be effected as follows.

Referring to Figure 1, a secondary signal (28) is added to the signal 9 passing to the receiver amplifier 10 by means of a directional coupler (33: a directional coupler is a standard reactive RF device which can be used to produce the sum of two input signals at its output). The signal 28 fed to the directional coupler 33 is derived from the oscillator 1. The amplitude and phase of this signal 28 are arranged to be such that the first term in the curly brackets in Equation 14 is cancelled so that the signal 9 reaching the amplifier 10 consists only of the second term in the curly brackets in Equation 14. This may be accomplished by the following procedure.

First of all the secondary signal 28 is turned off and the transmitter signal 30 is turned on. Resulting values of signals 24,25 are measured. From these a value of φ₁₁ may be deduced by means of Equation 11. φ₁₁ is measured many times consecutively by this means, and the values are averaged so that the time-varying component is suppressed and a value is obtained which corresponds closely to the quantity (φ₁₁)₀ in Equation 15. The amplitude *A*₁₁ is next deduced by the use of the following Equation derived from Equations 9 and 10, and from a knowledge of the amplitude *A*₂ of the oscillator signal:${\text{A}}_{\text{11}} \text{= 2} \frac{\text{(} {\text{s}}_{\text{24}} \text{(} \text{t} {\text{)}}^{\text{2}} \text{+} {\text{s}}_{\text{25}} \text{(} \text{t} {\text{)}}^{\text{2}} {\text{)}}^{\text{4}}}{{\text{A}}_{\text{2}}}$

We denote these values for (φ₁₁)₀ and *A*₁₁ by (φ₁₁)_{T} and (*A*₁₁)_{T} respectively. The transmitter signal 30 is then turned off, and a test signal is supplied to the directional coupler 33 *via* the network device (22). Network device 22 changes the gain and phase of its output signal relative to its input signal in accordance with two controls adjusted by the operator (its operation is explained in more detail hereinafter). The gain and phase shift of network device 22 are set to standard values (preferably unity and zero respectively), and the above procedure of deducing the values of φ₁₁ and *A*₁₁ is repeated. The new values for φ₁₁ and *A*₁₁ we denote by (φ₁₁)_{C} and (*A*₁₁)_{C} respectively. The controls of network device 22 are then adjusted until a condition is obtained where${\text{(φ}}_{\text{11}} {\text{)}}_{\text{C}} {\text{= (φ}}_{\text{11}} {\text{)}}_{\text{T}} \text{+ Π}$ and$\text{(} {\text{A}}_{\text{11}} {\text{)}}_{\text{C}} \text{= (} {\text{A}}_{\text{11}} {\text{)}}_{\text{T}}$ i.e. the directional coupler now produces a receiver signal 9 which is identical to the invariant component of the signal produced by the reflected beam 7 except that it has the opposite polarity. Since the receiver system is linear, this implies that the superposition of the two signals will lead to cancellation of the non-varying component in Equation 15. Finally, both signals 28 and 30 are turned on simultaneously. The application of the signal 28 will cancel the invariant part of the reflected beam 7 at the receiver, and the signal 11 will now be given by the Equation${\text{s}}_{\text{11}} \text{(} \text{t} \text{) = -} {\text{A}}_{\text{11}} {\text{{δφ}}_{\text{11}} \text{(} \text{t} {\text{)sin(ω}}_{\text{0}} \text{t} {\text{+ (φ}}_{\text{11}} {\text{)}}_{\text{0}} \text{)}}$ By repeating the argument steps represented by Equations 4 to 8 it can be shown that the output signals 24,25 are now given by the Equations${\text{s}}_{\text{24}} \text{(} \text{t} \text{) = ½} {\text{A}}_{\text{2}} {\text{A}}_{\text{11}} {\text{δφ}}_{\text{11}} \text{(} \text{t} {\text{)sin(φ}}_{\text{11}} {\text{)}}_{\text{0}} \text{)}$ and${\text{s}}_{\text{25}} \text{(} \text{t} \text{) = ½} {\text{A}}_{\text{2}} {\text{A}}_{\text{11}} {\text{δφ}}_{\text{11}} \text{(} \text{t} {\text{)cos(φ}}_{\text{11}} {\text{)}}_{\text{0}} \text{)}$ so that *s*₂₄(*t*) and *s*₂₅(*t*) are seen to be proportional to δφ₁₁(*t*)) and the desired indicator of displacements of the body 6 may be obtained by application of the following Equation to the signal *s*₂₄:${\text{δφ}}_{\text{11}} \text{(} \text{t} \text{) = 2} \frac{{\text{s}}_{\text{24}} \text{(} \text{t} \text{)}}{{\text{A}}_{\text{2}} {\text{A}}_{\text{11}} {\text{sin(φ}}_{\text{11}} {\text{)}}_{\text{0}}}$ or, if the phase of (φ₁₁)₀ is such that its sin is zero, then the following Equation may be used instead:${\text{δφ}}_{\text{11}} \text{(} \text{t} \text{) = 2} \frac{{\text{s}}_{\text{25}} \text{(} \text{t} \text{)}}{{\text{A}}_{\text{2}} {\text{A}}_{\text{11}} {\text{cos(φ}}_{\text{11}} {\text{)}}_{\text{0}}}$

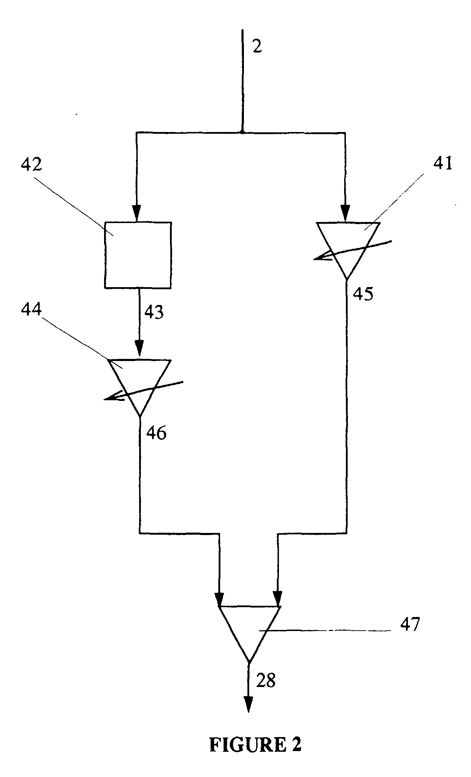

The network device 22 will now be explained. Figure 2 shows a block diagram of the network device 22. The input signal 2 passes to a variable-gain amplifier (41) and a quadrature filter (42). The output signal (43) from the filter 42 passes to a variable-gain amplifier (44). The amplifiers 41,44 may have gains which are negative, zero, or positive depending on their adjustment. The output signals 45,46 from the amplifiers 41,44 pass to a summing filter (47). The output 28 from the summing filter 47 is the sum of the two signals 45,46, and constitutes the output of the network device 22. By adjusting the gains of the amplifiers 41,44 the output signal 28 may be caused to have any desired amplitude and phase relative to the input signal 2.

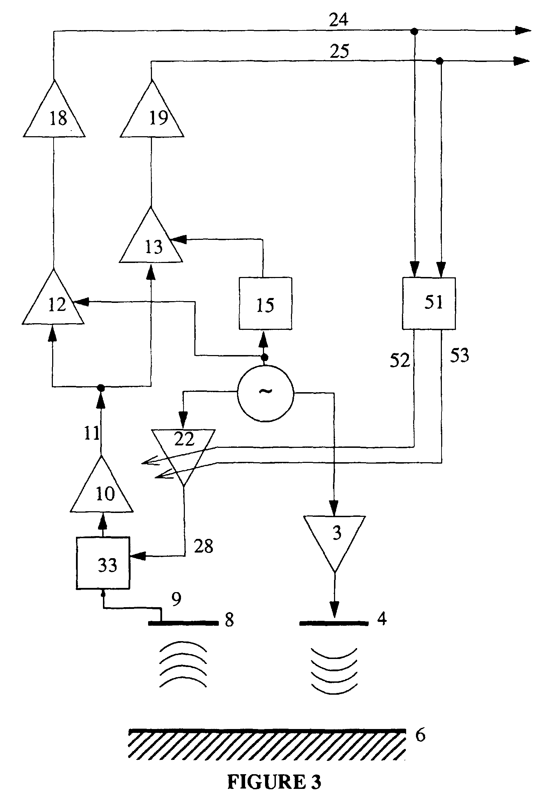

A second embodiment of the invention is now described (with reference to Figure 3); in this the network device 22 is controlled by an active control system which automatically adjusts the gains in the network so as to fulfil the conditions represented by Equations 17,18, thereby to cancel the unwanted part of the received signal 11 (the construction and operation of such active control systems is in itself well known to those versed in the art of active control). Figure 3 shows a block diagram of the second embodiment of the invention; the embodiment is substantially identical to that shown in Figure 1, but with the addition of the active control system (51). This system has two inputs which are the signals 24,25, and two output signals 52,53 which control the gains of the network device 22. The active control system 51 acts to minimise the sum of squares of its two input signals averaged over a period of a few seconds by varying its two output signals until a minimum is found. This may be implemented by using, for example, the gradient descent technique.

The active control system 51 thereby acts in exactly the manner prescribed in the first embodiment of the invention to cancel the non-varying component of the received signal 11. The system will adapt itself to any change in the environment which causes changes in the quantities (*A*₁₁)_{T} and (φ₁₁)₀, such as moving the radar system. It will thereby save much labour in attaining and maintaining the desired cancellation of the non-varying component of the received signal 11.

## Claims

1. A method of measuring small, time-varying displacements of a vibrating object (6), which method involves the object (6) being illuminated with electromagnetic radiation (5) of a radar nature - that is, of a wavelength considerably larger than the displacements - and the returned echo signal (7,9) then being amplified to enable its subsequent use to provide useful data, which method is **characterised in that**
a signal (28) equivalent to the echo from the object (6) when it is *not* vibrating is subtracted from the returned echo signal (7,9) before it is amplified so that the signal that *is* amplified consists only or mostly of the very much smaller component of the echo which is due to the displacements of the vibrating object (6) from its rest position.

2. A method as claimed in Claim 1, in which the subtraction from the returned echo signal (7,9) takes place immediately after the returned signal (7) has been picked up by the receiving antenna (8), and so before the antenna's output (9) is fed into the receiver proper.

3. A method as claimed in either of the preceding Claims, in which the signal (28) to be subtracted from the returned echo signal (9) is a suitably-small part of the generated signal (2) suitably modified in phase and then electronically added to the returned echo signal (7,9).

4. A method as claimed in Claim 3, in which the small part of the generated signal (2) is provided by feeding a portion of the generated signal (2) to an attenuator (22), and in which the attenuator (22) enables the signal (2) to be modified in amplitude and phase.

5. A method as claimed in Claim 4, in which in the attenuator (22) is a network device wherein the input signal (2) is passed to a variable-gain amplifier (41) and a quadrature filter (42), the output (43) from the filter (42) is fed to another variable-gain amplifier (44), and the amplifiers' output signals (45,46) are then passed to a summing filter (47) the output (28) of which is the sum of the two amplifier outputs (45,46) and constitutes the output of the network device (22).

6. A method as claimed in Claim 5, in which automatic adjustment of the network device (22) is enabled by using an active control system in the form of a feedback circuit (51) which acts to minimise the time-average of the square of the amplitude of the returned signal, and in which the feedback circuit (51) operates according to the method of gradient descent, so that the circuit detects the amplitude of the received echo (7,9) and repeatedly modifies the amplitude and phase of the signal (28) subtracted therefrom in such a way as to reduce the time-average of the square of the signal's amplitude as far as possible.

7. A method as claimed in any of the preceding Claims, in which the signal (28) equivalent to the echo from the object (6) when it is *not* vibrating is subtracted from the returned echo signal (7,9) before it is amplified by using a directional coupler (33), and by feeding the former signal (28) to one input of the directional coupler (33) and the latter signal (9) to the other input thereof.

8. A method as claimed in any of the preceding Claims, in which a first antenna (4) is used to transmit the radar signal (5) and a separate, second, antenna (8) is used to receive the echoes (7), and in which the transmitter and receiver antennae (4,8) are dipole antennae, and are disposed at right angles to each other.

9. A method as claimed in any of the preceding Claims, in which the signal (9,11) received from the receiver antenna is demodulated by mixing with a signal (2) which is derived from the signal used to drive the transmitter antenna (4).

10. Apparatus for measuring small, time-varying displacements of a vibrating object (6), which apparatus includes transmitting means (1,3,4) for illuminating the object (6) with electromagnetic radiation (5) of a radar nature - that is, of a wavelength considerably larger than the displacements - and receiver means (8,33,10) for receiving and amplifying the returned echo signal (7,9) to enable its subsequent use to provide useful data, which apparatus is **characterised in that** it also includes:
generating means (22) to supply a second signal (28) equivalent to the echo from the object (6) when it is *not* vibrating; and
coupler means (33) to subtract that second signal (28) from the returned echo signal (9) before it is amplified so as to provide a third signal that consists only or mostly of the very much smaller component of the echo signal (9) which is due to the displacements of the vibrating object (6) from its rest position, and then to feed that third signal to the receiver amplifier (10).

11. Apparatus as claimed in Claim 10 when performing the method as defined in any of Claims 1 to 9.

## Patentansprüche

1. Verfahren zum Messen kleiner, zeitlich variierender Verschiebungen eines vibrierenden Objektes (6), wobei das Verfahren die Beleuchtung des Objektes (6) mit elektromagnetischer Radarstrahlung (5), d.h. mit Strahlen mit einer Wellenlänge, die wesentlich größer ist als die Verschiebungen, und anschließendes Verstärken des zurückgekehrten Echosignals (7, 9) umfasst, damit dieses nachfolgend zur Erzeugung nützlicher Daten verwendet werden kann, wobei das Verfahren **dadurch gekennzeichnet ist, dass**
ein Signal (28) äquivalent zu dem Echo von dem Objekt (6), wenn es nicht vibriert, von dem zurückgekehrten Echosignal (7, 9) subtrahiert wird, bevor es verstärkt wird, so dass das Signal, das verstärkt wird, ganz oder hauptsächlich aus der viel kleineren Komponente des Echos besteht, die auf die Verschiebungen des vibrierenden Objekts (6) aus seiner Ruheposition zurückzuführen ist.

2. Verfahren nach Anspruch 1, bei dem die Subtraktion von dem zurückgekehrten Echosignal (7, 9) unmittelbar nach dem Empfang des zurückgekehrten Signals (7) durch die Empfangsantenne (8) und somit vor dem Speisen des Antennenausgangs (9) in den eigentlichen Empfänger erfolgt.

3. Verfahren nach einem der vorherigen Ansprüche, bei dem das Signal (28), das von dem zurückgekehrten Echosignal (9) subtrahiert werden soll, ein geeignet kleiner Teil des erzeugten Signals (2) ist, das auf geeignete Weise phasenmoduliert und dann elektronisch zu dem zurückgekehrten Echosignal (7, 9) addiert wird.

4. Verfahren nach Anspruch 3, bei dem der kleine Teil des erzeugten Signals (2) durch Speisen eines Abschnitts des erzeugten Signals (2) zu einem Dämpfungsglied (22) bereitgestellt wird, und wobei das Dämpfungsglied (22) eine Amplituden- und Phasenmodulation des Signals (2) ermöglicht.

5. Verfahren nach Anspruch 4, bei dem das Dämpfungsglied (22) ein Netzbauelement ist, bei dem das Eingangssignal (2) zu einem Regelverstärker (41) und einem Quadraturfilter (42) gesendet wird, wobei der Ausgang (43) von dem Filter (42) zu einem anderen Regelverstärker (44) gespeist wird und die Empfängerausgangssignale (45, 46) zu einem Summenfilter (47) geleitet werden, dessen Ausgang (28) die Summe der beiden Verstärkerausgänge (45, 46) ist und den Ausgang des Netzbauelementes (22) bildet.

6. Verfahren nach Anspruch 5, bei dem eine automatische Einstellung des Netzbauelementes (22) durch die Verwendung eines aktiven Steuersystems in der Form einer Rückkopplungsschaltung (51) ermöglicht wird, deren Aufgabe es ist, das Zeitmittel des Quadrats der Amplitude des zurückgekehrten Signals zu minimieren, und wobei die Rückkopplungsschaltung (51) gemäß dem Gradientenabstiegsverfahren arbeitet, so dass die Schaltung die Amplitude des empfangenen Echos (7, 9) erfasst und Amplitude und Phase des davon subtrahierten Signals (28) wiederholt auf eine solche Weise moduliert, dass das Zeitmittel des Quadrats der Signalamplitude weitgehend reduziert wird.

7. Verfahren nach einem der vorherigen Ansprüche, bei dem das Signal (28), das zu dem Echo von dem Objekt (6) äquivalent ist, wenn es nicht vibriert, von dem zurückgekehrten Echosignal (7, 9) subtrahiert wird, bevor es durch einen Richtungskoppler (33) verstärkt wird, und durch Speisen des ersteren Signals (28) zu einem Eingang des Richtungskopplers (33) und das letztere Signal (9) zu dessen anderem Eingang.

8. Verfahren nach einem der vorherigen Ansprüche, bei dem eine erste Antenne (4) zum Senden des Radarsignals (5) und eine separate, zweite Antenne (8) zum Empfangen der Echos (7) verwendet wird, und wobei die Sende- und Empfangsantenne (4, 8) Dipolantennen sind, die im rechten Winkel zueinander aufgestellt sind.

9. Verfahren nach einem der vorherigen Ansprüche, bei dem das Signal (9, 11), das von der Empfangsantenne empfangen wird, durch Mischen mit einem Signal (2) demoduliert wird, das von dem zum Ansteuern der Sendeantenne (4) verwendeten Signal abgeleitet wurde.

10. Vorrichtung zum Messen kleiner, zeitlich variierender Verschiebungen eines vibrierenden Objekts (6), wobei die Vorrichtung Sendemittel (1, 3, 4) zum Beleuchten des Objektes (6) mit elektromagnetischer Radarstrahlung (5), d.h. mit Strahlen mit einer Wellenlänge, die wesentlich größer ist als die Verschiebungen, und Empfangsmittel (8, 33, 10) zum Empfangen und Verstärken des zurückgekehrten Echosignals (7, 9) umfasst, um dieses nachfolgend zur Erzeugung nützlicher Daten zu verwenden, wobei die Vorrichtung **dadurch gekennzeichnet ist, dass** sie auch folgendes umfasst:
ein Erzeugungsmittel (22) zum Zuführen eines zweiten Signals (28), das zu dem Echo vom Objekt (6) äquivalent ist, wenn es nicht vibriert; und
Kopplungsmittel (33) zum Subtrahieren dieses zweiten Signals (28) von dem zurückgekehrten Echosignal (9), um ein drittes Signal zu erzeugen, das nur oder hauptsächlich aus der viel kleineren Komponente des Echosignals (9) besteht, das auf die Verschiebungen des vibrierenden Objektes (6) aus seiner Ruheposition zurückzuführen ist,
und dann zum Speisen dieses dritten Signals zum Empfangsverstärker (10).

11. Vorrichtung nach Anspruch 10 und gemäß einem der Ansprüche 1 bis 9.

## Revendications

1. Procédé de mesure de petits déplacements variant dans le temps d'un objet vibrant (6), lequel procédé implique l'éclairage de l'objet (6) avec un rayonnement électromagnétique (5) d'une nature radar - autrement dit d'une longueur d'onde considérablement supérieure aux déplacements - et le signal d'écho renvoyé (7,9) étant ensuite amplifié pour permettre son utilisation ultérieure afin de fournir des données utiles, lequel procédé est **caractérisé en ce que**
un signal (28) équivalent à l'écho provenant de l'objet (6) quand il ne vibre *pas* est soustrait du signal d'écho renvoyé (7,9) avant qu'il soit amplifié de telle sorte que le signal qui est amplifié consiste uniquement ou essentiellement en la composante bien plus petite de l'écho qui est dû aux déplacements de l'objet vibrant (6) par rapport à sa position de repos.

2. Procédé selon la revendication 1, dans lequel la soustraction du signal d'écho renvoyé (7,9) intervient immédiatement après que le signal rétroréfléchi (7) a été capté par l'antenne de réception (8), et donc avant que la sortie (9) de l'antenne ne soit passée dans le récepteur proprement dit.

3. Procédé selon l'une ou l'autre des revendications précédentes, dans lequel le signal (28) à soustraire du signal d'écho renvoyé (9) est une partie convenablement petite du signal généré (2) convenablement modifié en phase puis ajouté électroniquement au signal d'écho renvoyé (7,9).

4. Procédé selon la revendication 3, dans lequel la petite partie du signal généré (2) est fournie en passant une partie du signal généré (2) à un atténuateur (22), et dans lequel l'atténuateur (22) permet de modifier le signal (2) en amplitude et en phase.

5. Procédé selon la revendication 4, dans lequel dans l'atténuateur (22) se trouve un dispositif de réseau dans lequel le signal d'entrée (2) est passé à un amplificateur à gain variable (41) et un filtre en quadrature (42), la sortie (43) du filtre (42) est passée à un autre amplificateur à gain variable (44), et les signaux de sortie (45,46) des amplificateurs sont ensuite passés à un filtre de sommation (47) dont la sortie (28) est la somme des deux sorties d'amplificateur (45,46) et constitue la sortie du dispositif de réseau (22).

6. Procédé selon la revendication 5, dans lequel le réglage automatique du dispositif de réseau (22) est activé en utilisant un système de commande active ayant la forme d'un circuit de contre-réaction (61), lequel agit pour minimiser la moyenne de temps du carré de l'amplitude du signal rétroréfléchi, et dans lequel le circuit de contre-réaction (51) fonctionne conformément au procédé de descente de gradient, de telle sorte que le circuit détecte l'amplitude de l'écho reçu (7,9) et modifie de façon répétée l'amplitude et la phase du signal (28) qui en est soustrait de manière à réduire le plus possible la moyenne de temps du carré de l'amplitude du signal.

7. Procédé selon l'une quelconque des revendications précédentes, dans lequel le signal (28) équivalent à l'écho provenant de l'objet (6) quand il ne vibre *pas* est soustrait du signal d'écho renvoyé (7,9) avant qu'il soit amplifié en utilisant un coupleur directif (33), et en passant le premier signal (28) à une entrée du coupleur directif (33) et le deuxième signal (9) à l'autre entrée de celui-ci.

8. Procédé selon l'une quelconque des revendications précédentes, dans lequel une première antenne (4) est utilisée pour émettre le signal radar (5) et une deuxième antenne distincte (8) est utilisée pour recevoir les échos (7), et dans lequel les antennes d'émission et de réception (4, 8) sont des antennes dipôles et sont disposées perpendiculairement l'une par rapport à l'autre.

9. Procédé selon l'une quelconque des revendications précédentes, dans lequel le signal (9,11) reçu de l'antenne de réception est démodulé par mixage avec un signal (2) qui est dérivé du signal utilisé pour commander l'antenne d'émission (4).

10. Dispositif pour mesurer de petits déplacements variant dans le temps d'un objet vibrant (6), lequel dispositif comporte un moyen d'émission (1,3,4) pour éclairer l'objet (6) avec un rayonnement électromagnétique (5) d'une nature radar - autrement dit d'une longueur d'onde considérablement supérieure aux déplacements - et un moyen de réception (8,33,10) pour recevoir et amplifier le signal d'écho renvoyé (7,9) pour permettre son utilisation ultérieure afin de fournir des données utiles, lequel dispositif est **caractérisé en ce qu'**il comporte aussi :
un moyen de génération (22) pour fournir un deuxième signal (28) équivalent à l'écho provenant de l'objet (6) quand il ne vibre *pas ;* et
un moyen de coupleur (33) pour soustraire le deuxième signal (28) du signal d'écho renvoyé (7,9) de manière à fournir un troisième signal qui consiste uniquement ou essentiellement en la composante bien plus petite du signal d'écho (9) qui est dû aux déplacements de l'objet vibrant (6) par rapport à sa position de repos, et ensuite passer ce troisième signal à l'amplificateur de récepteur (10).

11. Dispositif selon la revendication 10 et tel que défini dans l'une quelconque des revendications 1 à 9.
